# EUROPÄISCHE PATENTSCHRIFT

(11) **EP 2 364 907 B1**
(45) Veröffentlichungstag und Bekanntmachung des Hinweises auf die Patenterteilung: **28.11.2018**
(21) Anmeldenummer: 11001360.4
(22) Anmeldetag: 18.02.2011
(51) Int. Cl.: B62M 9/1342, B62M 9/137

(54) **Seilzugbetätigungseinrichtungseinrichtung für Fahrrad-Kettenwerfer**
Cable actuation device for bicycle derailleurs
Dispositif d'actionnement de câble de commande pour un dérailleur de bicyclette

(30) Priorität: 12.03.2010 DE 102010011391
(43) Veröffentlichungstag der Anmeldung: 14.09.2011
(73) Patentinhaber: SRAM Deutschland GmbH, 97424 Schweinfurt (DE)
(72) Erfinder: Auer, Marcus, 97525 Schwebheim (DE); Hamisch, Thorsten, 97072 Würzburg (DE)

(56) Entgegenhaltungen:
- EP-A2- 1 031 504
- EP-A2- 1 314 636
- DE-U1- 20 023 891

## Beschreibung

Gegenstand der Erfindung ist eine Einrichtung zum Führen und Abstützen des Seils zum Betätigen eines vorderen Kettenwerfers für Fahrräder.

Kettenwerfer an Fahrrädern dienen dazu, die Antriebskette zwischen verschiedenen, an der Tretkurbel montierten Kettenrädern umzulegen. Sie weisen einen feststehenden Teil, einen Parallelogramm-Mechanismus sowie einen beweglichen Teil auf. Der feststehende Teil ist mit dem Fahrradrahmen verbunden, am beweglichen Teil ist eine Kettenführung zum Zusammenwirken mit der Kette montiert. Zur Montage am Fahrradrahmen ist am feststehenden Teil eine Befestigungsschelle vorgesehen, die entsprechend des Durchmessers des Sitzrohrs auch unterschiedlich groß ist. Zum Teil weisen die Sitzrohre einen ovalen Querschnitt auf. In diesem Fall wird der feststehende Teil an einem am Sitzrohr befestigten Anlötteil verschraubt, oder es kommt eine flexible Schelle zum Einsatz. Die Kettenführung ist angepasst an die Zähnezahl- bzw. Durchmesserverhältnisse der Kettenräder. An Rennrädern sind normalerweise zwei, bei Mountain-Bikes drei Kettenräder vorgesehen. Die Kettenführung weist in den Bereichen, in denen ein Kontakt mit der Kette beim Umschalten eintritt, entsprechend gestaltete Führungspartien auf. Das Sitzrohr am Fahrrad hat im Verhältnis zur Kettenstrebe unterschiedliche Winkelstellungen, was außerdem noch Einfluss auf die Gestaltung der Kettenführung hat.

Weitere verschiedene Ausführungsformen von Kettenwerfern ergeben sich dadurch, dass das Betätigungsseil entweder nach unten, um das Tretlagergehäuse herum, oder nach oben, dem Sitzrohr folgend, verlegt ist. Schließlich werden die Kettenwerfer von der eingefahrenen in die ausgefahrene Position entweder durch die Seilzugsbestätigung, oder durch die Kraft der Rückholfeder betätigt.

In der Regel wird der Betätigungsseilzug an einem der zwei Parallelogramm-Arme zwischen feststehendem und beweglichem Teil befestigt. Bei der Verschwenkbewegung ergeben sich Veränderungen der effektiven Hebellänge. Im Stand der Technik sind verschiedene Ausführungen von Kabelführungen bekannt geworden, die ausgelegt sind, die effektive Hebellänge möglichst konstant zu halten. Dabei stützt sich das Betätigungsseil an einer Führungsfläche ab, die sich ab der Seilklemmung erstreckt.

Als Bauraum, in dem ein Kettenwerfer untergebracht werden kann, steht der freie Raum innerhalb der Kettenräder, außerhalb des Sitzrohrs und oberhalb des Tretlagergehäuses sowie eingeschränkt zwischen Hinterradbereifung bzw. Schutzblech und Sitzrohr zur Verfügung. Dabei ist zwischen Sitzrohr und Bereifung an einem Mountain-Bike wesentlich mehr Freiraum verfügbar im Verhältnis zum Rennrad, wo die Tendenz besteht, das Hinterrad möglichst weit in Richtung des Tretlagers heranzurücken, wodurch der Hinterradreifen sehr nah an das Sitzrohr kommt.

In der EP 0 653 347 ist ein Kettenwerfer gezeigt, der einen ausgeprägten Kabelführungsbereich am inneren Zugarm aufweist. Dadurch ist der Zugarm wesentlich vergrößert und aufwändiger zu fertigen. Infolge der einstückigen Verbindung zwischen dem ursprünglich stabförmigen Arm und der Kabelführung treten keine störenden Nachgiebigkeiten in Erscheinung, die zu einem Verlust am Betätigungsweg des Seilzuges führen könnten.

In der EP 1 040 992 ist ein abnehmbarer Kabelführungsadapter gezeigt, der neben den Vorteilen einer Kabelführung auch noch ermöglicht, den Kettenwerfer an unterschiedliche Bedingungen in Hinsicht auf die Seilbetätigung anzupassen. Negativ tritt in Erscheinung, dass alle Verformungen am Adapter unmittelbaren Einfluss auf die Seilbetätigung haben. Es muss auf jeden Fall sichergestellt sein, dass der Adapter nach einer Montage am Betätigungsarm fest mit diesem verbunden ist, und es ist ein entsprechender baulicher Aufwand zu betreiben.

Das Dokument EP 1 031 504 zeigt alle Merkmale aus dem Oberbegriff von Anspruch 1.

Es ergibt sich als Zielsetzung für die vorliegende Erfindung, eine mit dem Zugarm verbundene Kabelführung bereitzustellen, die die genannten Nachteile nicht aufweist. Gelöst wird diese Aufgabe dadurch, dass Zugarm und Kabelführung nicht demontierbar miteinander verbunden werden. Die Kabelführung wird entsprechend den Anforderungen gestaltet. Sie weist Führungsmittel auf, die eine sichere Führung und Abstützung des Betätigungsseils gewährleisten, sowohl bei einer Verlegung des Seils nach oben, als auch nach unten. Außerdem ist die Kabelführung platzsparend, und die Verluste an Betätigungskraft infolge Reibung sind niedrig. Dazu wird ein Klemmvorsprung am Verbindungsarm durch eine Öffnung an der Kabelführung hindurchgeführt, wodurch die bei der Betätigung auftretenden Kräfte nahe zur Ersteckungsebene der Kabelführung angreifen. Weiterhin wird die Seilklemmschraube durch die Kabelführung eingeschraubt, wodurch die Elemente zum Klemmen des Seils auf einer Seite der Kabelführung positioniert sind, während der Schraubenkopf der Klemmschraube sich an der gegenüber liegenden Seite der Kabelführung befindet. Die Seilklemmschraube ist in einer Richtung orientiert, die eine leichte Zugänglichkeit mit dem Werkzeug zum Schraubenkopf gewährleistet. Dies liegt im Interesse des Fahrradnutzers, der den Kettenwerfer in einfacher Weise montieren und ausrichten kann. Ähnlich verhält es sich bei der Montage bei einem Fahrradhersteller.

Der Verbindungsarm muss bei diesem Lösungsansatz nicht in einer größeren Anzahl von Varianten existieren. Die Anpassung an verschiedene Einbaubedingungen erfolgt dadurch, dass ein Verbindungsarm mit unterschiedlichen Seilführungen kombiniert und dann zur Montage des kompletten Kettenwerfers genutzt wird.

### Figurenbeschreibung

- Fig. 1: zeigt einen vorderen Kettenwerfer für ein Fahrrad, an dem die erfindungsgemäße Seilzugbetätigungseinrichtung angewendet wird, wobei das Zugseil nach unten verlegt ist.
- Fig. 2: zeigt einen vorderen Kettenwerfer für ein Fahrrad, an dem die erfindungsgemäße Seilzugbetätigungseinrichtung angewendet wird, wobei das Zugseil nach oben verlegt ist.
- Fig. 3: zeigt den Verbindungsarm und das Seilführungsteil, das unlösbar mit dem Verbindungsarm verbunden ist, wobei die Betrachtungsrichtung die schräg durch das Seilführungsteil verlaufende Seilklemmschraube erkennen lässt.
- Fig. 4: zeigt den Verbindungsarm und das Seilführungsteil, das unlösbar mit dem Verbindungsarm verbunden ist, wobei die Betrachtungsrichtung die Seilklemmeinrichtung auf der in Bezug auf den Schraubenkopf am Seilführungsteil auf der gegenüber liegenden Seite positioniert erkennen lässt.
- Fig. 5: zeigt den Verbindungsarm und das Seilführungsteil im Zustand vor der Montage.

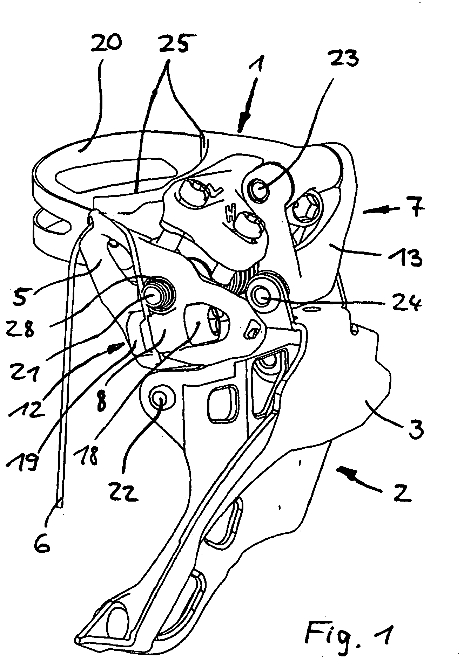

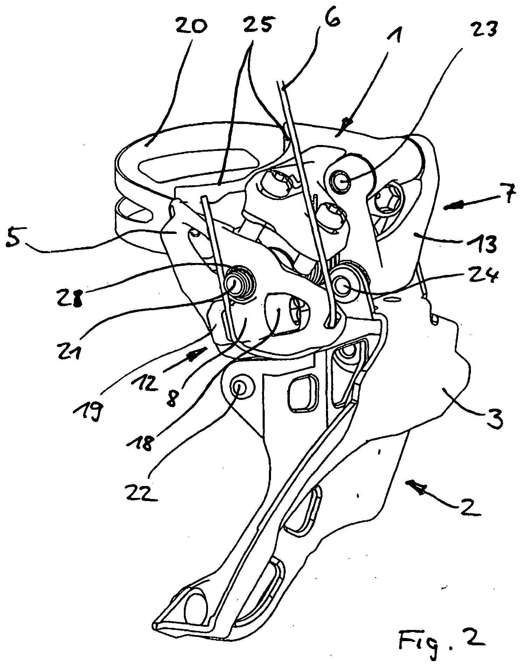

In den Figuren 1 und 2 ist die erfindungsgemäße Seilführung an einem vorderen Kettenwerfer dargestellt, wobei in Figur 1 das Betätigungsseil nach unten, und in Figur 2 nach oben geführt ist. Der Kettenwerfer besteht aus dem feststehenden Teil 1, dem beweglichen Teil 2 und dem Parallelogramm-Mechanismus 7, der den feststehenden Teil 1 und beweglichen Teil 2 verbindet. Hauptbestandteile des Parallelogramm-Mechanismus 7 sind der Verbindungsarm 4 und der Führungsarm 13. Der Verbindungsarm 4 ist mit dem Gelenkbolzen 21 am feststehenden Teil 1 und mit dem Gelenkbolzen 22 am beweglichen Teil 2 gelenkig verbunden. Der Führungsarm 13 ist mit dem Gelenkbolzen 23 am feststehenden Teil 1 und mit dem Gelenkbolzen 24 am beweglichen Teil 2 gelenkig verbunden. Der Gelenkbolzen 21 ist an einer tieferen Position als der Gelenkbolzen 23 angeordnet. Da der Abstand zwischen den Gelenkbolzen 21 und 23 im Verbindungsarm und damit die Länge des Verbindungsarms 4 der Länge des Führungsarms 13 entspricht, ändert sich die räumliche Orientierung der mit dem beweglichen Teil 2 verbundenen Kettenführung 3 nicht beim Verschwenken von einer eingezogenen zu einer ausgefahrenen Position. Ihre Neigung bleibt erhalten. Die Kettenführung weist einen Durchgang für die Kette auf und legt die Kette zwischen den Kettenrädern am Tretlager um.

Die Bewegung der Kettenführung von der eingezogenen zur ausgefahrenen Position erfolgt durch eine Zugbewegung am Betätigungsseil 6, die entgegen gesetzte Bewegung erfolgt durch die Wirkung einer Rückholfeder, die um den Gelenkbolzen 21 herum angeordnet ist.

Der feststehende Teil 1 des Kettenwerfers wird fest mit einem Bestandteil des Fahrradrahmens verbunden. Im gezeigten Ausführungsbeispiel dient dazu eine das Sitzrohr umschlingende flexible Schelle 20, die mit einer Spannschraube zusammengezogen wird und die Sitzrohrauflage 25 am feststehenden Teil 1 gegen das Sitzrohr drückt. Alternative Möglichkeiten der Befestigung bestehen in der Verwendung einer starren Schelle mit Scharnier am feststehenden Teil 1 sowie eine Direktmontage, bei der der feststehende Teil 1 mittels einer Schraube an einem Anlötteil am Sitzrohr festgeschraubt wird.

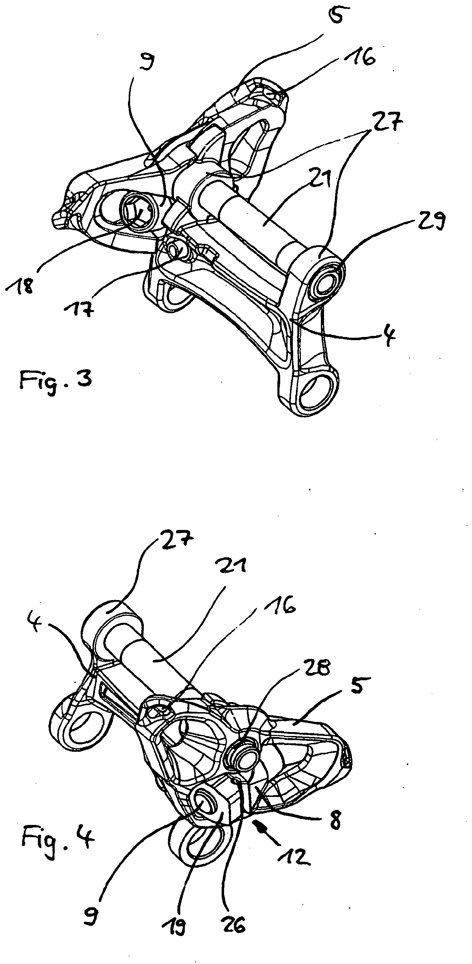

Das Seilführungsteil 5 ist im montierten Zustand fest und nicht demontierbar mit dem Verbindungsarm 4 verbunden, wie aus den Figuren 3 und 4 hervorgeht. Der Gelenkbolzen 21 ist innerhalb der Bolzenaugen 27 am Verbindungsarm 4 angeordnet. Er verläuft in seinem Mittelbereich durch den feststehenden Teil 1 hindurch sowie an einem Ende durch die erste Öffnung 10 am Seilführungsteil 5. Durch einen Nietkopf 29 des Gelenkbolzens 21 - in Figur 3 rechts, in Figur 4 links ersichtlich - und durch einen Federring 28 - in Figur 4 rechts ersichtlich, in Figur 3 auf der linken Seite angeordnet, aber verdeckt - ist der Gelenkbolzen in axialer Richtung gegenüber dem Seilführungsteil 5 und dem Verbindungsarm 4 festgelegt. Der Nietkopf 29 und der Federring 28 stellen axial wirksame Anschläge dar, deren Funktion auch mit anderen Mitteln, wie zum Beispiel einem umlaufenden Flansch oder einem quer eingefügten Stift erreichbar wäre.

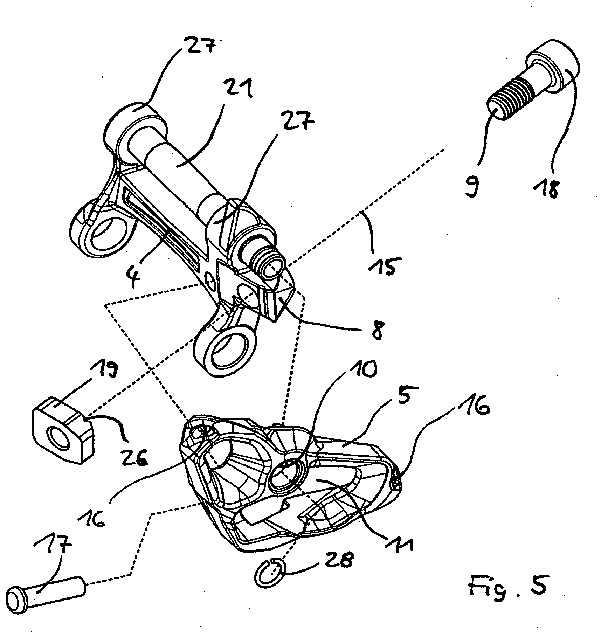

Neben der ersten Verbindung zwischen Verbindungsarm 4 und Seilführungsteil 5 mittels des Gelenkbolzens 21 existiert eine zweite Verbindung durch den Bolzen 17, wie in Figur 5 in demontiertem Zustand veranschaulicht und wie in Figur 2 in montiertem Zustand ersichtlich. Damit ergibt sich eine feste, unlösbare und stabile Verbindung zwischen Verbindungsarm 4 und Seilführungsteil 5. Durch den Gelenkbolzen 21 sind das Seilführungsteil 5 und der Verbindungsarm 4 in axialer Richtung zueinander festgelegt. Mit dem Bolzen 17 wird jegliche Verdrehung des Seilführungsteils 5 und dem Verbindungsarm 4 zueinander um den Gelenkbolzen 21 verhindert.

Die Seilklemmschraube 9 in Verbindung mit der Seilklemmplatte 19 und dem Klemmvorsprung 8 bilden die Seilklemmeinrichtung 12. In einer Nut an der Seilklemmplatte 19 wird das Betätigungsseil 6 geklemmt und je nach Seilführung am Kettenwerfer zu einem der Durchbrüche 16 geführt. Diese Durchbrüche 16 dienen dazu, das Betätigungsseil 6 zu halten und verhindern sein Lösen vom Seilführungsteil 5. Die Seilklemmeinrichtung 12 befindet sich an der zum Verbindungsarm 4 gegenüberliegenden Seite am Seilführungsteil 5. Damit ergibt sich eine gute Zugänglichkeit und ein Betätigungsseil 6 kann einfach montiert und gegebenenfalls ausgetauscht werden. Andererseits besteht nur ein geringer Abstand zwischen der Seilklemmung und dem Durchgang des Gelenkbolzens 21 durch den feststehenden Teil 1. In die Größe der Reibungskräfte geht dieser Abstand von der Lagerstelle am Bolzenauge 27 in einer Richtung parallel zum Gelenkbolzen 21 mit ein. Dadurch bestehen günstige Verhältnisse beim Abstützen von Kräften, die durch die Zugkraft des Betätigungsseils 6 entstehen. Die Reibungskräfte werden gering gehalten.

Die Längsachse 15 der Seilklemmschraube 9 verläuft schräg zur Erstreckungsebene des Seilführungsteils 5. Der Schraubenkopf 18 kommt deshalb im Verhältnis zur Seilklemmeinrichtung 12 auf der anderen Seite des Seilführungsteils 5 zu liegen und ist an dieser Position für eine Betätigung mit einem Werkzeug gut zugänglich.

Die erfindungsgemäße Anordnung bietet somit eine günstige Lösung für die Anforderung, die sich aus der Notwendigkeit nach einer größeren Anzahl von Ausführungsvarianten für die Einrichtung der Seilzugbetätigung ergibt. Der relativ aufwändig herzustellende Verbindungsarm 4 wird durch die Komplettierung mit unterschiedlich ausführbaren Seilführungsteilen 5 an unterschiedliche Bedingungen angepasst. Der Verbindungsarm 4 und das Seilführungsteil 5 sind stabil und fest miteinander verbunden, es treten keine Verluste in Hinsicht auf den Betätigungsweg am Betätigungsseil 6 auf. Außerdem bietet die konstruktive Lösung eine gute Zugänglichkeit für die Montage und für den Austausch des Betätigungsseilzugs, weil der Schraubenkopf 18 der Seilklemmschraube 9 an einer für den Nutzer günstigen Stelle und Orientierung platziert ist.

### Bezugszeichen

- 1: feststehender Teil
- 2: beweglicher Teil
- 3: Kettenführung
- 4: Verbindungsarm
- 5: Seilführungsteil
- 6: Betätigungsseil
- 7: Parallelogramm-Mechanismus
- 8: Klemmvorsprung
- 9: Seilklemmschraube
- 10: erste Öffnung
- 11: zweite Öffnung
- 12: Seilklemm-Einrichtung
- 13: Führungsarm
- 15: Längsachse
- 16: Durchbruch
- 17: Bolzen
- 18: Schraubenkopf
- 19: Seilklemmplatte
- 20: Schelle
- 21: bis 24 Gelenkbolzen
- 25: Sitzrohrauflage
- 26: Nut
- 27: Bolzenauge
- 28: Federring
- 29: Nietkopf

## Patentansprüche

1. Seilzugbetätigungseinrichtung an einem vorderen Kettenwerfer für ein Fahrrad;
mit einem feststehenden Teil (1) zur Befestigung am Fahrradrahmen;
mit einem beweglichen Teil (2), der mit einer Kettenführung (3) zum Umlegen der Kette zwischen mehreren Kettenrädern an einer Tretkurbeleinrichtung bewegbar zwischen einer eingezogenen und einer ausgefahrenen Stellung verbunden ist;
mit einem Parallelogramm-Mechanismus (7) zwischen feststehendem Teil (1) und beweglichem Teil (2), der einen Verbindungsarm (4) eines Parallelogramm-Mechanismus (7) enthält; **gekennzeichnet durch**, ein nicht demontierbar am Verbindungsarm 4 verbundenes Seilführungsteil (5) einer Seilzugeinrichtung, das Mittel zur Führung und Aufnahme des Betätigungsseils (6) der Seilzugeinrichtung sowohl für eine Verlegung des Betätigungsseils (6) nach oben am Fahrradrahmen, als auch für eine Verlegung des Betätigungsseils (6) für nach unten am Fahrradrahmen aufweist;
wobei der Verbindungsarm (4) einen Klemmvorsprung (8) für die Montage einer Seilklemmschraube (9) aufweist;
wobei das Seilführungsteil (5) eine zweite Öffnung (11) zum Durchtritt des Klemmvorsprungs (8) sowie eine erste Öffnung (10) zur Aufnahme eines Gelenkbolzens (21) zur drehbaren Verbindung zwischen dem Verbindungsarm (4) und dem feststehenden Teil (1) aufweist
dass das Seilführungsteil (5) und der Verbindungsarm (4) mittels eines Bolzens (17) miteinander vernietet sind, wodurch jegliche Verdrehung des Seilführungsteils (5) und des Verbindungsarms (4) zueinander um den Gelenkbolzen (21) verhindert wird.

2. Seilzugbetätigungseinrichtung nach Anspruch 1,
**dadurch gekennzeichnet,**
**dass** der Gelenkbolzen (21) in axialer Richtung gegenüber dem Seilführungsteil (5) und gegenüber dem Verbindungsarm (4) durch beidseitige Anschläge (28, 29) am Gelenkbolzen (21) festgelegt ist.

3. Seilzugbetätigungseinrichtung nach einem der Ansprüche 1 und 2,
**dadurch gekennzeichnet,**
**dass** das Seilführungsteil (5) eine Erstreckungsebene senkrecht zum Gelenkbolzen (21) aufweist und dass die Seilklemmschraube (9) mit ihrer Längsachse (15) schreig zu dieser Erstreckungsebene ausgerichtet ist.

4. Seilzugbetätigungseinrichtung nach Anspruch 3,
**dadurch gekennzeichnet,**
**dass** das Seilführungsteil (5) eine dem Parallelogramm-Mechanismus (7) zugewandte Seite aufweist, auf der sich der Schraubenkopf (18) der Seilklemmschraube (9) mit Eingriffselementen für die Werkzeuge und eine vom Parallelogramm-Mechanismus (7) abgewandte Seite befindet, und
das Seilführungsteil (5) eine vom Parallelogramm-Mechanismus (7) abgewandte Seite aufweist, auf der eine Seilklemmeinrichtung (12) das Betätigungsseil (6) klemmt.

5. Seilzugbetätigungseinrichtung nach Anspruch 4,
**dadurch gekennzeichnet,**
**dass** die Seilklemmeinrichtung (12) zum Montieren des Betätigungsseils (6) am Verbindungsarm (4) des Parallelogramm-Mechanismus (7) den Klemmvorsprung (8), die Seilklemmschraube (9) sowie eine Seilklemmplatte (19) umfasst.

6. Seilzugbetätigungseinrichtung nach Anspruch 1,
**dadurch gekennzeichnet,**
**dass** der Verbindungsarm (4) in Bezug auf das feststehende Teil (1) unterhalb zu einem Führungsarm (13) des Parallelogramm-Mechanismus (7) sowie zwischen Führungsarm (13) und feststehendem Teil (1) angeordnet ist.

7. Seilzugbetätigungseinrichtung nach Anspruch 1 oder 2,
**dadurch gekennzeichnet,**
**dass** das Seilführungsteil (5) zwei Durchbrüche (16) für das Hindurchführen des Betätigungsseils (6) für ein nach oben oder ein nach unten vom Kettenwerfer wegführendes Betätigungsseil (6) aufweist.

8. Seilzugbetätigungseinrichtung nach einem der Ansprüche 1 bis 3,
**dadurch gekennzeichnet,**
**dass** das Seilführungsteil (5) aus Kunststoff, Aluminium, Carbon o. ä. Material besteht, das eine geringe Dichte hat, wodurch das Seilführungsteil (5) ein geringes Gewicht aufweist.

## Claims

1. Cable control actuating device on a front derailleur for a bicycle;
with a stationary part (1) for fastening to the bicycle frame;
with a movable part (2), which is connected to a chain guide (3) for transferring the chain between a plurality of chain wheels on a pedal crank device so as to be movable between a retracted and an extended position;
with a parallelogram mechanism (7) between the stationary part (1) and the movable part (2), which contains a connecting arm (4) of a parallelogram mechanism (7);
**characterized by** a cable guide part (5) of a cable control device, said cable guide part being connected nonremovably to the connecting arm (4) and having means for guiding and receiving the actuating cable (6) of the cable control device both for moving the actuating cable (6) upwards on the bicycle frame and for moving the actuating cable (6) downwards on the bicycle frame;
wherein the connecting arm (4) has a clamping projection (8) for the mounting of a cable clamping screw (9);
wherein the cable guide part (5) has a second opening (11) for the passage of the clamping projection (8) and also a first opening (10) for receiving a hinge pin (21) for the rotatable connection between the connecting arm (4) and the stationary part (1),
wherein
the cable guide part (5) and the connecting arm (4) are riveted to each other by means of a bolt (17), as a result of which any rotation of the cable guide part (5) and of the connecting arm (4) with respect to each other about the hinge pin (21) is prevented.

2. Cable control actuating device according to Claim 1, **characterized in that** the hinge pin (21) is fixed in the axial direction in relation to the cable guide part (5) and in relation to the connecting arm (4) by means of stops (28, 29) on both sides of the hinge pin (21).

3. Cable control actuating device according to either of Claims 1 and 2, **characterized in that** the cable guide part (5) has a plane of extent perpendicular to the hinge pin (21), and **in that** the cable clamping screw (9) is oriented with its longitudinal axis (15) obliquely with respect to said plane of extent.

4. Cable control actuating device according to Claim 3, **characterized in that** the cable guide part (5) has a side which faces the parallelogram mechanism (7) and on which the screw head (18) of the cable clamping screw (9) is located with engagement elements for the tools, and a side facing away from the parallelogram mechanism (7), and the cable guide part (5) has a side which faces away from the parallelogram mechanism (7) and on which a cable clamping device (12) clamps the actuating cable (6).

5. Cable control actuating device according to Claim 4, **characterized in that** the cable clamping device (12) for mounting the actuating cable (6) on the connecting arm (4) of the parallelogram mechanism (7) comprises the clamping projection (8), the cable clamping screw (9) and a cable clamping plate (19).

6. Cable control actuating device according to Claim 1, **characterized in that** the connecting arm (4) is arranged with respect to the stationary part (1) below a guide arm (13) of the parallelogram mechanism (7) and between the guide arm (13) and the stationary part (1).

7. Cable control actuating device according to Claim 1 or 2, **characterized in that** the cable guide part (5) has two apertures (16) for the passage of the actuating cable (6) for an actuating cable (6) leading upwards or an actuating cable (6) leading downwards away from the derailleur.

8. Cable control actuating device according to one of Claims 1 to 3, **characterized in that** the cable guide part (5) is composed of plastic, aluminium, carbon or similar material which has a low density, as a result of which the cable guide part (5) has a low weight.

## Revendications

1. Dispositif d'actionnement de câble de commande pour un dérailleur avant de bicyclette;
avec une partie fixe (1) à fixer au cadre de bicyclette;
avec une partie mobile (2), qui est reliée de façon déplaçable entre une position rétractée et une position étendue à un guide-chaîne (3) destiné à déplacer la chaîne entre plusieurs plateaux sur un système de pédalier;
avec un mécanisme à parallélogramme (7) entre la partie fixe (1) et la partie mobile (2), qui comprend un bras de liaison (4) d'un mécanisme à parallélogramme (7); **caractérisé par** une partie de guidage de câble (5) d'un dispositif de câble de commande reliée de façon non démontable au bras de liaison (4), qui présente des moyens pour guider et recevoir le câble d'actionnement (6) du dispositif de câble de commande aussi bien pour déplacer le câble d'actionnement (6) vers le haut sur le cadre de bicyclette et que pour déplacer le câble d'actionnement (6) vers le bas sur le cadre de bicyclette;
dans lequel le bras de liaison (4) présente une saillie de serrage (8) pour le montage d'une vis de serrage de câble (9);
dans lequel la partie de guidage de câble (5) présente une deuxième ouverture (11) pour le passage de la saillie de serrage (8) ainsi qu'une première ouverture (10) destinée à recevoir un axe d'articulation (21) pour la liaison rotative entre le bras de liaison (4) et la partie fixe (1);
dans lequel la partie de guidage de câble (5) et le bras de liaison (4) sont rivés l'une à l'autre au moyen d'un boulon (17), ce qui empêche toute rotation de la partie de guidage de câble (5) et du bras de liaison (4) l'un par rapport à l'autre autour de l'axe d'articulation (21).

2. Dispositif d'actionnement de câble de commande selon la revendication 1, **caractérisé en ce que** l'axe d'articulation (21) est immobilisé en direction axiale par rapport à la partie de guidage de câble (5) et par rapport au bras de liaison (4) par des butées bilatérales (28, 29) sur l'axe d'articulation (21).

3. Dispositif d'actionnement de câble de commande selon une des revendications 1 et 2, **caractérisé en ce que** la partie de guidage de câble (5) présente un plan d'extension perpendiculaire à l'axe d'articulation (21) et **en ce que** la vis de serrage de câble (9) est orientée avec son axe longitudinal (15) oblique par rapport à ce plan d'extension.

4. Dispositif d'actionnement de câble de commande selon la revendication 3, **caractérisé en ce que** la partie de guidage de câble (5) présente un côté tourné vers le mécanisme à parallélogramme (7), sur lequel se trouve la tête de vis (18) de la vis de serrage de câble (9) avec des éléments d'action pour des outils et un côté détourné du mécanisme à parallélogramme (7), et la partie de guidage de câble (5) présente un côté détourné du mécanisme à parallélogramme (7), sur lequel un dispositif de serrage de câble (12) serre le câble d'actionnement (6).

5. Dispositif d'actionnement de câble de commande selon la revendication 4, **caractérisé en ce que** le dispositif de serrage de câble (12) comprend, pour le montage du câble d'actionnement (6) sur le bras de liaison (4) du mécanisme à parallélogramme (7), la saillie de serrage (8), la vis de serrage de câble (9) ainsi qu'une plaque de serrage de câble (19).

6. Dispositif d'actionnement de câble de commande selon la revendication 1, **caractérisé en ce que** le bras de liaison (4) est disposé par rapport à la partie fixe (1) en dessous d'un bras de guidage (13) du mécanisme à parallélogramme (7) ainsi qu'entre le bras de guidage (13) et la partie fixe (1).

7. Dispositif d'actionnement de câble de commande selon la revendication 1 ou 2, **caractérisé en ce que** la partie de guidage de câble (5) présente deux découpes (16) pour le passage du câble d'actionnement (6) pour un câble d'actionnement (6) partant du dérailleur vers le haut ou vers le bas.

8. Dispositif d'actionnement de câble de commande selon l'une quelconque des revendications 1 à 3, **caractérisé en ce que** la partie de guidage de câble (5) est constituée de matière plastique, d'aluminium, de carbone ou d'un matériau similaire, qui présente une faible densité, la partie de guidage de câble (5) présentant de ce fait un faible poids.
